# EUROPEAN PATENT APPLICATION

(11) **EP 4 124 906 A1**
(43) Date of publication of application: **01.02.2023**
(21) Application number: 22176011.9
(22) Date of filing: 30.05.2022
(51) Int. Cl.: G03B 17/02, G03B 17/56, G03B 19/22, H04N 5/232, B60Q 1/26, B60R 1/22, B60R 11/04

(54) **AUTONOMOUS IMAGING DEVICE FOR VEHICLES**

(30) Priority: 26.07.2021 ES 202130720
(71) Applicant: Federal Signal Vama, S.A.U., 08339 Vilassar de Dalt (Barcelona) (ES)
(72) Inventor: RAMÓN ARRUFAT, Xavier, 08339 Vilassar De Dalt (Barcelona) (ES)
(74) Representative: Ungria López, Javier

(57) **Abstract**

It is disclosed an autonomous imaging device for vehicles (1) comprising: a base (2); a casing (3), wherein the casing is located on the central portion of the base; a camera hub (5); a solar panel (4) located on the central portion of the casing (3) and connected to the camera hub; a router (6) connected to the camera hub; at least one camera (8, 9) fixed to the base (2) and located on the perimeter of the base, wherein the camera (8, 9) is connected to the camera hub (5); a battery (7) connected to at least the camera hub, the router and the camera. Wherein the camera hub (5) is configured to charge the battery with at least energy from the solar panel (4). The camera can be a video camera (8) and/or an ALPR camera (9).

## Description

### Object of the invention

The present invention relates to an autonomous imaging device for vehicles. The device of the present invention is placed on the roof of a vehicle and allows for the imaging and subsequent processing of images from the environment by means of video cameras. It may also have ALPR cameras for reading licence plates. ALPR cameras are licence plate recognition systems, the acronym of which is "Automatic Licence Plate Recognition".

As a novelty, the device of the present invention has a solar panel and batteries that, together with a built-in microprocessor (in the camera hub) that processes the images from the video cameras and ALPR cameras, allow the device of the present invention to be completely autonomous. These features, together with a fastening system for fastening to the vehicle by means of magnets, make the device of the present invention completely portable. Therefore, a completely autonomous and portable imaging device is disclosed.

### Technical field

The technical field to which the present invention belongs is the field of imaging and subsequent image processing devices for vehicles.

### Technical problem to be solved and background of the invention

Currently, bridge-type devices that are placed on the roof of a vehicle have an exclusively wired power supply with which they connect to the vehicle to take power from the vehicle itself. This is because the devices consume energy at a high rate and, therefore, including batteries in the devices without an electrical connection to the vehicle would significantly limit the duration time of the device. In other words, a device only provided with batteries would have very little usage time and it would not be functional.

It would therefore be desirable to find an imaging device for vehicles that could have a prolonged usage time without needing to receive power from the carrier vehicle of the device.

### Description of the invention

In order to achieve the objectives and avoid the drawbacks described in the preceding sections, an autonomous imaging device for vehicles is disclosed, the main advantage of which is that it has its own power supply, which makes the operation of the device independent of the operation of the vehicle carrying the device in terms of whether or not the vehicle powers the autonomous imaging device of the present invention. In this way, the autonomous imaging device of the present invention can operation while the vehicle is completely turned off.

Therefore, in a first aspect of the invention, an autonomous imaging device for vehicles is disclosed, comprising:
- a base, which is preferably flat;
- a casing on the base, wherein the casing is located on the central portion of the base, and wherein the casing is fixed to the base;
- a camera hub fixed to the base;
- a solar panel located on the central portion of the casing and connected to the camera hub;
- a router connected to the camera hub;
- at least one camera fixed to the base and located on the perimeter of the base, wherein the camera is connected to the camera hub;
- a battery connected to at least the camera hub, the router and the camera.

Wherein the camera hub is configured to charge the battery with at least energy (or charge) from the solar panel. Preferably, the camera is selected from a video camera and an ALPR camera. Optionally, the device may comprise more than one camera, so it would be possible to have groups of cameras made up of several video cameras, several ALPR cameras, and video cameras and ALPR cameras simultaneously. The camera hub has a built-in CPU ("Central Processing Unit") that processes the images received by the video cameras and/or ALPR cameras.

In an embodiment of the autonomous imaging device for vehicles of the present invention, the device has an oblong shape (rectangular shape with rounded corners) and comprises four ALPR cameras, wherein the ALPR cameras are located in respective corners of the device.

In another embodiment of the autonomous imaging device for vehicles of the present invention, the device comprises four video cameras, wherein the video cameras are located in respective corners of the device above the ALPR cameras.

In another embodiment of the autonomous imaging device for vehicles of the present invention, the device additionally comprises a power and data connector connected to the camera hub for charging the battery, wherein the power and data connector is connectable to an external power supply. The external power supply can be selected from a power supply of a carrier vehicle of the device and a conventional external power supply such as the AC mains. The power and data connector of the device of the present invention is preferably connectable to the carrier vehicle by means of a power and data connector of the carrier vehicle itself.

In another embodiment of the autonomous imaging device for vehicles of the present invention, the router can have short-range Wi-Fi/Bluetooth wireless connectivity to communicate with a carrier vehicle of the very device of the present invention. And, optionally or additionally, the router can have long-range 4G/5G wireless connectivity to communicate with a remote device, such as a cloud device or any other type of remote device known in the state of the art.

In another embodiment of the autonomous imaging device for vehicles of the present invention, the camera (whatever it is and including video cameras and ALPR cameras) has a tilt system comprising respective lateral pivots fixed to lateral portions of the camera which are housed in U-shaped camera mounts. It is possible that the device comprises several cameras and one is above another; there may even be two cameras above two cameras, or one camera above two cameras, or even two cameras above one camera. In these cases, the device comprises at least one upper camera and at least one lower camera, the at least one upper camera located above the at least one lower camera, wherein each upper and lower camera has a camera mount, such that the camera mount of the at least one upper camera is fixed to a top portion of the at least one lower camera and the at least one lower camera is fixed to the base of the device of the present invention.

In another embodiment of the autonomous imaging device for vehicles of the present invention, and in order to make the device "portable", the device additionally comprises magnets fixed to the base below the base to temporarily fix the device to a carrier vehicle of the device. Optionally or additionally, the device may comprise an extendable security strap fixed to the base, wherein the security strap has respective stops (caught between the vehicle door and chassis) that can be fixed to the carrier vehicle of the device which retain the device in the event it detaches due to the magnets not being strong enough to keep the device fixed to the carrier vehicle of the device. Optionally or additionally, the device of the present invention may comprise a handle for carrying the device.

Next, to help better understand this specification and as an integral part thereof, a series of figures is attached in which the object of the invention is depicted in an illustrative and non-limiting manner.

### Brief description of the figures

**Figure 1** shows a rear view of the device of the present invention.
**Figure 2** shows a plan view of the device of the present invention without a casing to show the internal elements of the device.
**Figure 3** shows a rear view of the device of the present invention together with a power and data connector that can be located in a carrier vehicle of the device.
**Figure 4** shows a front view of the device of the present invention.
**Figure 5** shows a bottom view of the device of the present invention wherein the fastening means (strap and magnets) for fastening the device to the carrier vehicle of the device are shown.
**Figure 6** shows the device of the present invention connected to an electric vehicle and to an external power supply.

### Description of an exemplary embodiment of the invention

List of references used in the figures:
1.- autonomous imaging device for vehicles
2.- flat base
3.- casing
4.- solar panel
5.- camera hub
6.- router
7.- battery
8.- video camera
9.- ALPR camera
10.- power and data connector
11.- external power supply
12.- power and data connector of a carrier vehicle
13.- carrier vehicle
14.- magnets
15.- handle
16.- security strap
17.- security strap stops
18.- U-shaped camera mount
19.- lateral pivots fixed to the camera

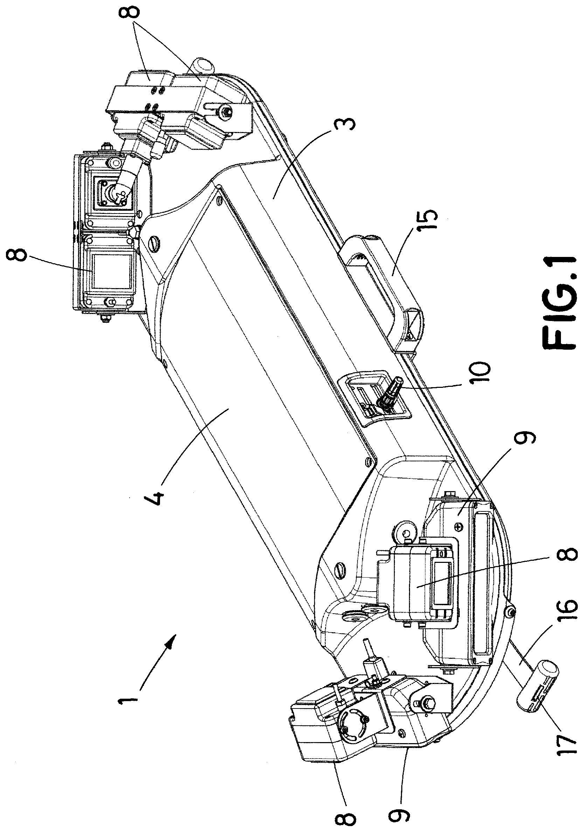

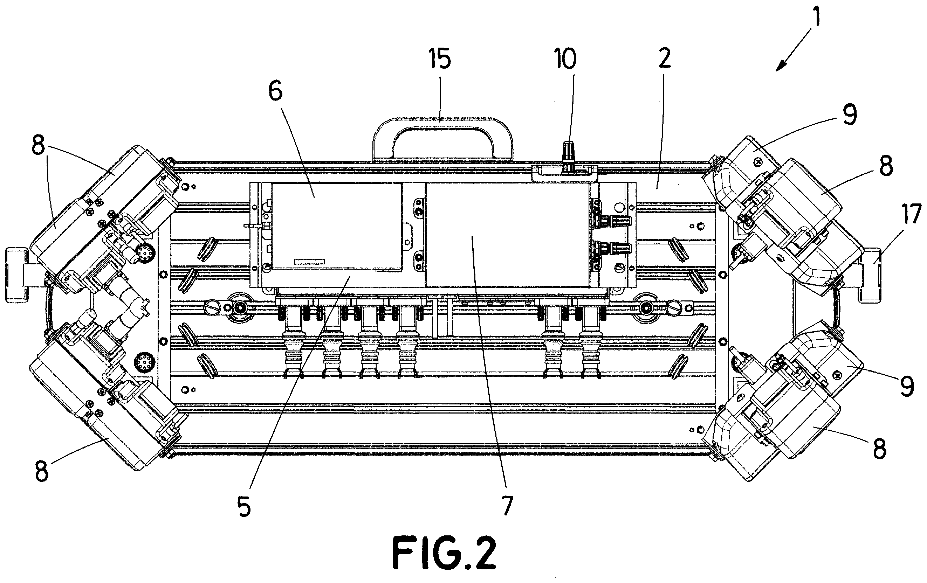

Considering the numbering adopted in the figures, and observing Figs. 1 and 2, the autonomous imaging device for vehicles 1 has the flat base 2, the casing 3 fixed on the base 2, the camera hub 5 fixed to the base 2, the solar panel 4 connected to the camera hub 5 and located on the central portion of the casing 3, the router 6 connected to the camera hub 5, the video cameras 8 and the ALPR cameras 9 fixed to the base 2, wherein the cameras 8 and 9 are connected to the camera hub 5. The device 1 further comprises the battery 7, which is connected to the camera hub 5, the router 6, the video cameras 8 and the ALPR cameras 9. The camera hub 5 is configured to charge the battery 7 with energy (or charge) from the solar panel 4 and optionally with energy from an external supply connected to the power and data connector 10. To charge the battery 7, the camera hub 5 has a smart charger that converts the input voltage of both the solar panel 4 and the power and data connector 10 into the charging voltage needed to charge the battery 7. The charge value of the battery 7 is 14v DC, and the input voltages of the solar panel 4 are around 63 to 65 volts DC. Regarding the voltages in the power and data connector 10, the voltages can be 14v DC when it comes from a conventional vehicle that carries the device 1, 24v DC when it comes from an electric vehicle that carries the device 1, and 24v DC when it comes from a charger/transformer connected to the 220v AC mains.

Additionally, the camera hub 5 has a built-in CPU ("Central Processing Unit"), which enables it to perform additional functions to the previously indicated charging, such as processing the images received by the video cameras 8 and ALPR cameras 9, and sending the results from the processing of the received images to external devices through the connectivity (Wi-Fi, Bluetooth, 4G/5G wired and/or wireless) provided by the router 6.

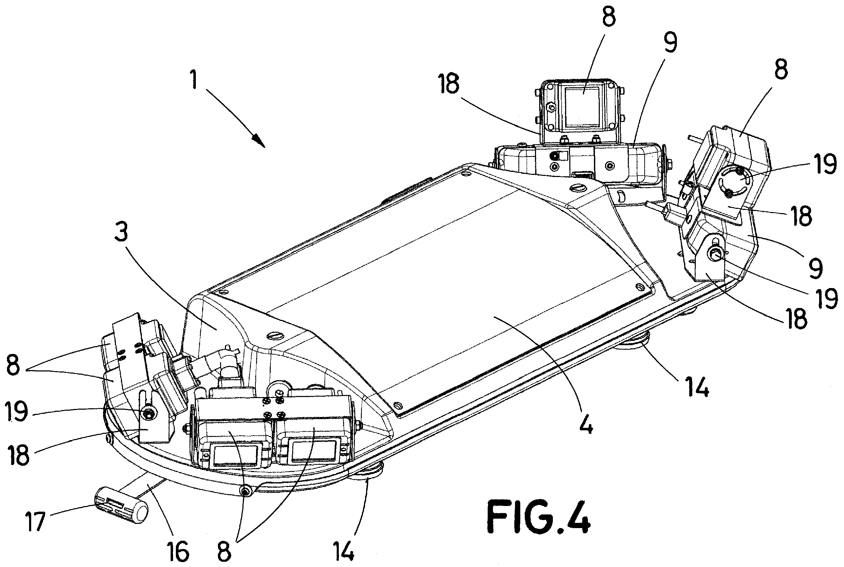

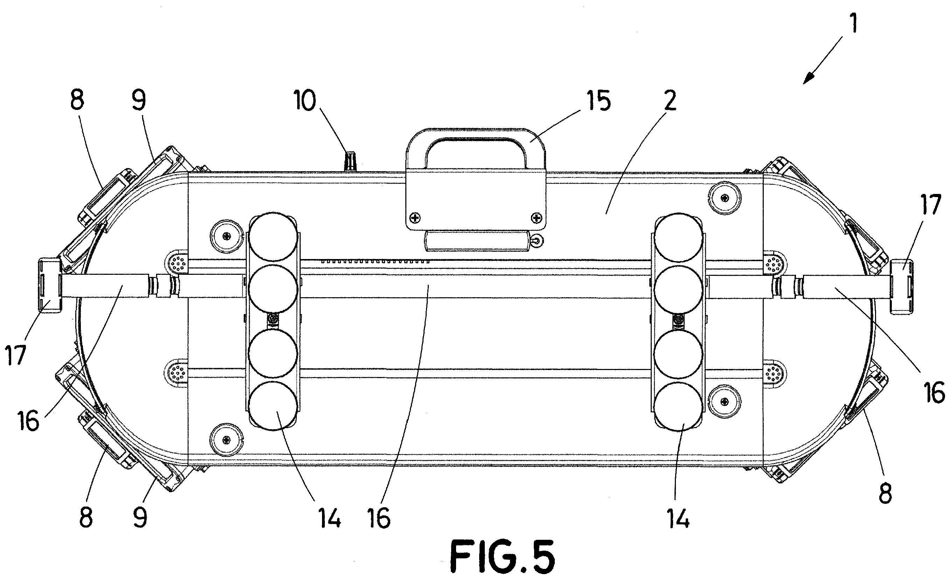

The autonomous imaging device for vehicles 1 shown in the figures is portable, as follows from the fact that the device 1 has the handle 15 on the central portion of the rear side and, below the base 2, the magnets 14 (see Fig. 5) and the security strap 16, at which ends the stops 17 are located, fixed to the same. The security strap 16 is extendable so that the stops 17 can be retained between a vehicle door and the very carrier vehicle of the device 1. Likewise, the device 1 shown in any of Figs. 1 to 6 has the base 2 with an oblong shape, i.e., a rectangular shape with rounded corners. The device 1 has the casing 3 which covers the internal elements of the device 1, such as at least: the camera hub 5, the router 6 and the battery 7. Additionally, the casing 3 has, on the central portion thereof, the solar panel 4. The solar panel 4 is curved to favour the aerodynamics of the device 1 as shown in Fig. 4, wherein it is seen that, on the front portion (front view shown in Fig. 4), the solar panel 4 starts from the flat base, increasing in height thereof, until it reaches the height of the casing 3 in the rear portion (rear view shown in Fig. 1). The power and data connector 10 is located on the upper portion of the casing 3 that corresponds to the rear side of the device 1.

In Figs. 1, 2 and 4, it is also seen that the device 1 has cameras 8, 9 in the corners of the device. Specifically, the device 1 has the ALPR cameras 9 in the corners on the left side of the device 1, and above the ALPR cameras 9, the device 1 has respective video cameras 8. On the other side of the device 1, the device 1 has, in each corner, groups of two video cameras 8. Both the video cameras 8 and the ALPR cameras 9 are connected to the camera hub 5 to which they send the video signals captured by the very cameras 8, 9 so that they are processed by the camera hub 5 and subsequently sent through the router 6.

The router 6 shown in Fig. 2 has short-range Wi-Fi/Bluetooth wireless connectivity to communicate with a carrier vehicle of the device 1, and it also has wired connectivity with the power and data connector 10 with which the device 1 can also connect (data link) with the carrier vehicle of the device 1. Additionally, the router 6 has long-range 4G/5G wireless connectivity to communicate with a remote device such as "cloud" devices.

In any of Figs. 1 to 4, it can be seen that the autonomous imaging device for vehicles 1 has a tilt system for the video cameras 8 and the ALPR cameras 9. The tilt system is comprised of the lateral pivots 19 that are fixed both to the lateral portions of the video cameras 8 and to the lateral portions of the ALPR cameras 9. The lateral pivots 19 are housed in grooves that have the U-shaped camera mounts 18 at the ends. The U-shaped camera mounts 18 are fixed to the base 2 of the device 1 and, in the case of cameras above others, the U-shaped camera mounts 18 that support the upper cameras can also be fixed above the top portion of the lower cameras. In the device 1 shown in Fig. 1, and observing the left portion of the device, the ALPR cameras 9 have the U-shaped camera mounts 18 to fix the ALPR cameras 9 to the base 2. In turn, the video cameras 8 have the U-shaped camera mounts 18 to fix the video cameras 8 to the ALPR cameras 9. The tilt system allows for vertical tilting of the video cameras 8 and ALPR cameras 9 from -35° to +35° above the horizontal. Moreover, the U-shaped camera mounts 18 are fixed both to the base 2 and to the camera 8, 9 by means of a central point that enables the video cameras 8 and/or the ALPR cameras 9 to rotate 360° about a vertical axis passing through the central point. In Figures 1 to 6, all the video cameras 8 and ALPR cameras 9 form 45° both with a horizontal axis passing through the long side of the device 1 and with a horizontal axis passing through the short side of the device 1.

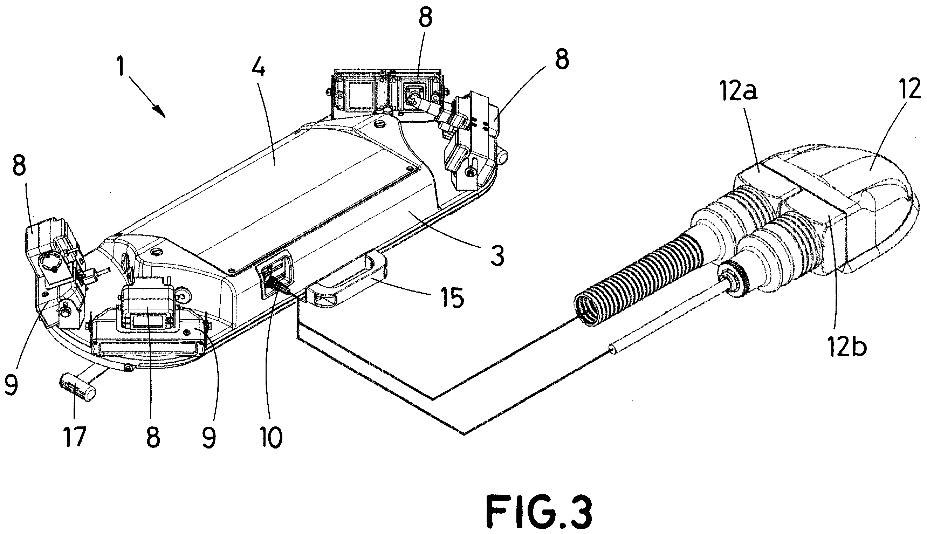

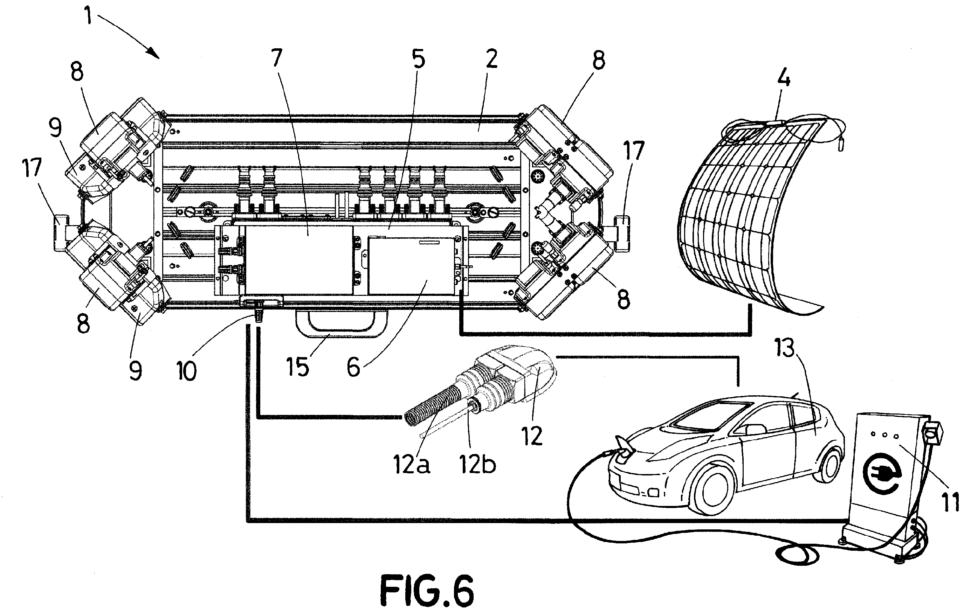

Although the device 1 can operate completely autonomously because it is powered by the battery 7 which is recharged by the solar panel 4, the device 1, by means of the power and data connector 10, can be connected to a carrier vehicle 13 by means of the power 12a and data 12b connector 12 of the carrier vehicle 13, as shown in Figs. 3 and 6. Fig. 6 also shows an external power supply 11 that charges the carrier vehicle 13, which is also electric. Therefore, the device 1 is charged with the charge coming from batteries of the carrier vehicle 13 through the connector 12. Alternatively, the battery 7 of the device 1 can be powered/charged by means of the power and data connector 10, which is directly connected to the external power supply 11.

## Claims

1. An autonomous imaging device for vehicles (1), **characterised in that** it comprises:
• a base (2);
• a casing (3) on the base (2), wherein the casing is located on the central portion of the base (2), and wherein the casing (3) is fixed to the base (2);
• a camera hub (5) fixed to the base (2);
• a solar panel (4) located on the central portion of the casing (3) and connected to the camera hub (5);
• a router (6) connected to the camera hub (5);
• at least one camera (8, 9) fixed to the base (2) and located on the perimeter of the base (2), wherein the camera (8, 9) is connected to the camera hub (5);
• a battery (7) connected to at least the camera hub (5), the router (6) and the camera (8, 9);
wherein the camera hub (5) is configured to charge the battery with at least energy from the solar panel (4).

2. The autonomous imaging device for vehicles (1), according to claim 1, wherein it further comprises a power and data connector (10) connected to the camera hub (5) for charging the battery (7), wherein the power and data connector (10) is connectable to an external power supply (11, 13).

3. The autonomous imaging device for vehicles (1), according to claim 1, wherein the router (6) has short-range Wi-Fi/Bluetooth wireless connectivity to communicate with a carrier vehicle (13) of the device (1), and wherein the router (6) has long-range 4G/5G wireless connectivity to communicate with a remote device.

4. The autonomous imaging device for vehicles (1), according to claim 1, wherein the camera (8, 9) is selected from a video camera (8) and an ALPR camera (9).

5. The autonomous imaging device for vehicles (1), according to claim 4, wherein the device (1) has an oblong shape and comprises four ALPR cameras (9), wherein the ALPR cameras (9) are located in respective corners of the device (1).

6. The autonomous imaging device for vehicles (1), according to claim 5, wherein the device (1) comprises four video cameras (8), wherein the video cameras (8) are located in respective corners of the device (1) above the ALPR cameras (9).

7. The autonomous imaging device for vehicles (1), according to claim 1, wherein the camera (8, 9) has a tilt system comprising respective lateral pivots (19) fixed to the lateral portions of the camera (8, 9) which are housed in U-shaped camera mounts (18).

8. The autonomous imaging device for vehicles (1), according to claim 7, wherein the device comprises at least one upper camera (8, 9) and a lower camera (8, 9), the upper camera located above the lower camera, wherein each camera (8, 9) has a camera mount (18), in such a way that the camera mount (18) of the upper camera is fixed to a top portion of the lower camera and the lower camera is fixed to the base (2).

9. The autonomous imaging device for vehicles (1), according to any one of claims 4 to 6, wherein the video camera (8) has a tilt system comprising respective lateral pivots (19) fixed to lateral portions of the video camera (8) which are housed in U-shaped camera mounts (18).

10. The autonomous imaging device for vehicles (1), according to any one of claims 4 to 6, wherein the ALPR camera (9) has a tilt system comprising respective lateral pivots (19) fixed to lateral portions of the ALPR camera (9) which are housed in U-shaped camera mounts (18).

11. The autonomous imaging device for vehicles (1), according to claim 1, wherein it further comprises magnets (14) fixed to the base (2) below the base (2) to fix the device (1) to a carrier vehicle (13) of the device (1).

12. The autonomous imaging device for vehicles (1), according to claim 7, wherein it further comprises an extendable security strap (16) fixed to the base (2), wherein the security strap (16) has respective stops (17) fixable to the carrier vehicle (13) of the device (1) which retain the device (1) in the event the magnets become detached.

13. The autonomous imaging device for vehicles (1), according to claim 1, wherein it further comprises a handle (15) for carrying the device (1).

14. The autonomous imaging device for vehicles (1), according to claim 2, wherein the power and data connector (10) is connectable to a carrier vehicle (13) by means of a power (12a) and data (12b) connector (12) of the carrier vehicle (13).
